# EUROPÄISCHE PATENTSCHRIFT

(11) **EP 2 442 527 B1**
(45) Veröffentlichungstag und Bekanntmachung des Hinweises auf die Patenterteilung: **27.05.2015**
(21) Anmeldenummer: 11185304.0
(22) Anmeldetag: 14.10.2011
(51) Int. Cl.: H04L 29/06, H04L 12/22, H04L 12/24, H04L 12/46, G05B 19/02

(54) **Verfahren und Vorrichtung zum Aufbau einer VPN-Verbindung zwischen zwei Netzwerken**
Method and device for creating a VPN connection between two networks
Procédé et dispositif de création d'une connexion VPN entre deux réseaux

(30) Priorität: 15.10.2010 DE 102010038228
(43) Veröffentlichungstag der Anmeldung: 18.04.2012
(73) Patentinhaber: Phoenix Contact GmbH & Co. KG, 32825 Blomberg (DE)
(72) Erfinder: Hilgenkamp, Ingo, 33397 Rietberg (DE)
(74) Vertreter: Michalski Hüttermann & Partner Patentanwälte mbB

(56) Entgegenhaltungen:
- EP-A1- 1 919 128
- WO-A2-02/17558
- DE-A1-102007 046 079
- US-A1- 2002 053 031

## Beschreibung

Die Erfindung betrifft ein Verfahren zum Aufbau einer VPN-Verbindung zwischen zwei Netzwerken, mit zwei den jeweiligen Netzwerken zugeordneten Kommunikationseinrichtungen, einer Vermittlungseinrichtung und einem Identifikationsmittel.

VPN-Verbindungen der eingangs genannten Art sind aus dem Stand der Technik gut bekannt und werden typischerweise dazu verwendet, Teilnehmer eines Netzwerkes aus ihrem ursprünglichen Netzwerk heraus in ein anderes Netzwerk einzubinden, so dass der Teilnehmer des ursprünglichen Netzwerkes so gestellt wird, als wäre er nicht mit seinem ursprünglichen Netzwerk verbunden, sondern direkt an dem anderen Netzwerk angeschlossen. VPN-Netzwerke haben insbesondere in verschiedenen industriellen Anwendungsgebieten, wie bei der Fernwartung einer Anlage, eine große Bedeutung und ermöglichen vielfach eine beträchtliche Ressourceneinsparung bei der Wartung der Anlage. Allerdings verlangt die Erstellung der individuellen Konfiguration, die jeweils für den Aufbau einer derartigen VPN-Verbindung notwendig ist und oftmals kundenspezifisch individuell ausgestaltet ist, neben einer Vielzahl unterschiedlicher Parameter, die zum einen von den jeweiligen Netzwerken der zugeordneten Kommunikationseinrichtungen, wie beispielsweise Server, erfragt werden müssen oder von den Sicherheitsstandards des Anlagenbetreibers bzw. des Fernwartungsdienstleisters abhängen, ein hohes IT- und Automatisierungswissen. Insofern ist es bei den aus dem Stand der Technik bekannten Systemen zum Aufbau einer VPN-Verbindung nachteilig, dass der Aufbau einer VPN-Verbindung, beispielsweise zur Durchführung einer Fernwartung einer Anlage, sehr aufwändig ist.

In diesem Zusammenhang sind aus der WO 02/17558 A2 ein System und ein Verfahren bekannt, um eine sichere Übertragung zwischen Knoten einer Arbeitsgruppe über ein öffentliches Netzwerk bereitzustellen, indem sie die Einrichtung eines virtuellen privaten Netzwerks (VPN) ermöglichen. Das System umfasst mindestens ein Paar von Knoten und einen VPN-Server. Das System wird zentral verwaltet, so dass, wenn ein Attribut in Bezug auf einen Knoten oder Server überarbeitet wird, die Konfigurations-Informationen im Zusammenhang mit diesem Attribut an jedem Knoten innerhalb des VPN aktualisiert werden.

Aus der DE 10 2007 046 079 A1 ist ein Verfahren zur Herstellung einer sicheren Verbindung von einem Service-Techniker zu einer von einem Störfall betroffenen Komponente einer ferndiagnostizierbaren und/oder fernwartbaren Automatisierungs-Umgebung bekannt. Zur Herstellung der sicheren Verbindung wird ein Service-Zertifikat benötigt, wobei zunächst mittels eines Einmal-Passworts eine sichere Initial-Verbindung vom Service-Techniker zu der Automatisierungs-Umgebung aufgebaut wird. Im Anschluss an den Aufbau der Initial-Verbindung wird ein zur Herstellung der sicheren Verbindung mit der von dem Störfall betroffenen Komponente der Automatisierungs-Umgebung benötigtes Service-Zertifikat von der Automatisierungs-Umgebung zum Service-Techniker übertragen wird und dann letztlich mittels des Service-Zertifikats die sichere Verbindung von dem Service-Techniker zu der von dem Störfall betroffenen Komponente hergestellt.

Aus der US 2002/0053031 A1 ist ein Verfahren zur Aktivierung eines virtuellen Netzwerks zwischen einem ersten Prozessor und einem zweiten Prozessor unter Verwendung mindestens eines zusätzlichen Prozessors, der vom ersten Prozessor und vom zweiten Prozessor getrennt ist, bekannt.

Es ist daher die Aufgabe der Erfindung, ein Verfahren zum Aufbau einer VPN-Verbindung bereitzustellen, mit dem in besonders einfacher und zudem sicherer Weise eine VPN-Verbindung zwischen zwei Netzwerken aufbaubar ist.

Diese Aufgabe wird durch die Gegenstände der unabhängigen Ansprüche gelöst. Bevorzugte Weiterbildungen sind in den Unteransprüchen beschrieben.

Eine Lösung der zuvor genannten Aufgabe besteht somit in einem Verfahren zum Aufbau einer VPN-Verbindung zwischen zwei Netzwerken, mit zwei den jeweiligen Netzwerken zugeordneten Kommunikationseinrichtungen, einer Vermittlungseinrichtung und einem Identifikationsmittel, mit den Schritten: b) Identifizieren der ersten Kommunikationseinrichtung mit dem Identifikationsmittel gegenüber der Vermittlungseinrichtung umfassend ein Einloggen auf einer Webseite der Vermittlungseinrichtung, wobei das Identifikationsmittel als ein temporärer Login-Account der Webseite ausgestaltet ist, der von der ersten Kommunikationseinrichtung in diesem Schritt erstellt wird, c) Senden eines ersten VPN-Datenpaketes von der ersten Kommunikationseinrichtung an die Vermittlungseinrichtung, e) Identifizieren der zweiten Kommunikationseinrichtung mit dem Identifikationsmittel gegenüber der Vermittlungseinrichtung umfassend ein Einloggen auf der Webseite der Vermittlungseinrichtung, wobei das Identifikationsmittel als der temporäre Login-Account der Webseite aus Schritt b) ausgestaltet ist, f) Senden eines zweiten VPN-Datenpaketes von der zweiten Kommunikationseinrichtung an die Vermittlungseinrichtung, k) Extrahieren des ersten VPN-Konfigurationsparameters und des zweiten VPN-Konfigurationsparameters aus dem empfangenen ersten VPN-Datenpaket und/oder aus dem empfangenen zweiten VPN-Datenpaket durch die Vermittlungseinrichtung, 1) Bereitstellen eines ersten VPN-Konfigurationsparameters zum Aufbau den VPN-Verbindung zwischen den Kommunikationseinrichtungen für die erste Kommunikationseinrichtung durch die Vermittlungseinrichtung, m) Bereitstellen eines zweiten VPN-Konfigurationsparameters zum Aufbau der VPN-Verbindung zwischen den Kommunikationseinrichtungen für die zweite Kommunikationseinrichtung durch die Vermittlungseinrichtung, und n) Aufbau der VPN-Verbindung zwischen den Kommunikationseinrichtungen durch die erste Kommunikationseinrichtung und/oder durch die zweite Kommunikationseinrichtung.

Erfindungsgemäß ist also vorgesehen, dass die Vermittlungseinrichtung den ersten VPN-Konfigurationsparameter der ersten Kommunikationseinrichtung zur Verfügung stellt und den zweiten VPN-Konfigurationsparameter der zweiten Kommunikationseinrichtung zur Verfügung stellt, so dass dadurch die Kommunikationseinrichtungen mittels der derart zur Verfügung gestellten Konfigurationsparameter in besonders einfacher Weise die VPN-Verbindung aufbauen können. Durch ein derartiges erfindungsgemäßes Verfahren wird also ermöglicht, dass eine VPN-Verbindung zwischen den Kommunikationseinrichtungen aufbaubar ist, ohne dass ein Bediener fachspezifisches IT-Wissen, wie beispielsweise zu VPN-Verbindungen, oder sonstige Kenntnisse der Netzwerke haben muss. Vorzugsweise umfassen der erste VPN-Konfigurationsparameter und/oder der zweite VPN-Konfigurationsparameter Informationen über die den jeweiligen Kommunikationseinrichtungen zugeordneten Netzwerke, Protokolle, Gateway IP-Adressen, Ports sowie andere aus dem Stand der Technik bekannte Informationen zum Aufbau einer VPN-Verbindung. Die VPN-Datenpakete können dabei zu der jeweiligen Kommunikationseinrichtung und/oder zu der Vermittlungseinrichtung korrespondierende und/oder davon abweichende Absender- bzw. Zieladressen beinhalten.

Dabei sind die Kommunikationseinrichtungen als aus dem Stand der Technik bekannte Einrichtungen zum Aufbau einer VPN-Verbindung ausgeführt, also beispielsweise jeweils als ein Router, eine Firewall und/oder ein Server. Ebenfalls ist die Vermittlungseinrichtung als ein aus dem Stand der Technik bekannte Einrichtung in einem Netzwerk zum Vermitteln von Diensten ausgeführt, beispielsweise als ein Server. Die Netzwerke sind bevorzugt als IP-Netzwerke ausgeführt, wobei vorzugsweise die VPN-Verbindung nach einem Protokoll wie IPsec, TLS/SSL, ViPNet, PPTP und L2TP, PPPD und SSH, und/oder SSTP ausgeführt ist. Ferner sind die den jeweiligen Kommunikationseinrichtungen zugeordneten Netzwerke und die Vermittlungseinrichtung über ein weiteres Netzwerk, wie das Internet, miteinander verbunden.

Gemäß der Erfindung ist also vorgesehen, dass sich die Kommunikationseinrichtungen nacheinander mit dem gleichen Identifikationsmittel gegenüber der Vermittlungseinrichtung identifizieren und in der Folge jeweils ein VPN-Datenpaket an die Vermittlungseinrichtung schicken. Erfindungsgemäß ist danach vorgesehen, dass die Vermittlungseinrichtung aus den empfangenen VPN-Datenpaketen die jeweiligen VPN-Konfigurationsparameter zum Aufbau einer VPN-Verbindung zwischen den Kommunikationseinrichtungen extrahiert und die derart erhaltenen VPN-Konfigurationsparameter den jeweiligen Kommunikationseinrichtungen zum nachfolgenden Aufbau der VPN-Verbindung zur Verfügung stellt. Dadurch lässt sich in besonders einfacher Weise eine VPN-Verbindung, vorzugsweise eine gesicherte VPN-Verbindung zwischen den zwei den jeweiligen Kommunikationseinrichtungen zugeordneten Netzwerken aufbauen.

Weiterhin ist bevorzugt, dass die erste Kommunikationseinrichtung über das der ersten Kommunikationseinrichtung zugeordnete erste Netzwerk mit einer Anlage und/oder mit einer Maschine verbunden ist und die zweite Kommunikationseinrichtung mit dem der zweiten Kommunikationseinrichtung zugeordneten zweiten Netzwerk eines Wartungsänbieters, wie beispielsweise dem Anlagenhersteller, verbunden ist, so dass der Wartungsanbieter über die derart aufgebaute VPN-Verbindung eine Fernwartung der Anlage bzw. Maschine durchführen kann.

Besonders bevorzugt ist Schritt b) durch einen Anwender derart ausführbar, dass das Identifizieren der ersten Kommunikationseinrichtung gegenüber der Vermittlungseinrichtung durch Aufrufen einer der Vermittlungseinrichtung zugeordneten Webseite erfolgt. Dabei kann das Identifikationsmittel beispielsweise als ein Login, Token und/oder Passwort der Webseite ausgeführt sein.

Gemäß der vorliegenden Erfindung werden also aus den durch die jeweiligen Kommunikationseinrichtungen an die Vermittlungseinrichtung gesendeten VPN-Datenpakete diejenigen Informationen zunächst extrahiert, welche zum Aufbau der VPN-Verbindung zwischen den Kommunikationseinrichtungen benötigt werden, und dann in einem weiteren Schritt die Informationen in Form von VPN-Konfigurationsparametern, vorzugsweise durch die Schritte 1) und/oder m), den jeweiligen Kommunikationseinrichtungen zur Verfügung gestellt. Dabei kann es gemäß einer Weiterbildung der Erfindung vorteilig sein, dass zunächst, eine Mehrzahl von ersten Datenpaketen und/oder oder zweiten Datenpaketen empfangen werden, bis dass alle erforderlichen Informationen zur Bestimmung des ersten VPN-Konfigurationsparameters und des zweiten VPN-Konfigurationsparameters aus den empfangenen ersten VPN-Datenpaketen und/oder aus den empfangenen zweiten VPN-Datenpaket ermittelt sind.

Die Erfindung erlaubt somit in vorteilhafter Weise, dass, entgegen dem aus dem Stand der Technik Bekannten, bei dem die VPN-Konfigurationsparameter in manueller Weise und fast ausnahmslos durch Hinzuziehung fachspezifischen Wissens erstellt werden mussten, vorliegend die VPN-Konfigurationsparameter in besonders einfacher Weise - quasi vollständig automatisiert - aus den VPN-Datenpaketen generiert werden. Damit wird es ermöglicht, eine VPN-Verbindung zwischen zwei Netzwerken in besonders einfacher Weise aufzubauen.

Gemäß der vorliegenden Erfindung wird mittels der in den Schritten 1) und/oder m) von der Vermittlungseinrichtung bereitgestellten VPN-Konfigurationsparameter die VPN-Verbindung zwischen den Kommunikationseinrichtungen aufgebaut, also nunmehr ohne weitere Interaktion der Vermittlungseinrichtung die VPN-Verbindung zwischen den Kommunikationseinrichtungen, so dass beispielsweise über die VPN-Verbindung eine Anlage fernwartbar ist.

Beispielsweise kann das Identifikationsmittel als ein temporärer Login-Account ausgestaltet sein, welcher durch die erste Kommunikationseinrichtung im Schritt b) erstellt wird, wobei dann in Schritt e) die zweite Kommunikationseinrichtung den gleichen Login-Account zum Identifizieren benutzt. Somit erlaubt eine derartige Ausgestaltung eine besonders einfache Bedienung bzw. Durchführung des erfindungsgemäßen Verfahrens zum Aufbau einer VPN-Verbindung zwischen zwei Netzwerken.

Nach einer weiteren bevorzugten Ausführungsform weist das Verfahren die Schritte: a) Herstellen einer Verbindung zwischen der ersten Kommunikationseinrichtung und der Vermittlungseinrichtung, und d) Herstellen einer Verbindung zwischen der zweiten Kommunikationseinrichtung und der Vermittlungseinrichtung auf. Dabei kann das Herstellen einer Verbindung zwischen der Kommunikationseinrichtung und der Vermittlungseinrichtung beispielsweise derart erfolgen, dass ein der jeweiligen Kommunikationseinrichtung zugeordneter Anwender eine der Vermittlungseinrichtung zugeordneten Webseite aufruft. Alternativ kann das Herstellen einer Verbindung zwischen der Kommunikationseinrichtung und der Vermittlungseinrichtung automatisiert durch die Kommunikationseinrichtung, beispielsweise nach einer Anforderung durch den Anwender, erfolgen. Ganz besonders bevorzugt erfolgt Schritt d) eine Stunde, vorzugsweise 30 Minuten, ganz besonders bevorzugt 5 Minuten, nach Schritt a). Durch derartige Ausgestaltungen kann der Aufbau der VPN-Verbindung in besonders einfacher Weise initialisiert werden.

Grundsätzlich kann Schritt 1) unmittelbar nach Schritt f) erfolgen, wie vorab ausgeführt. Gemäß einer weiteren bevorzugten Ausführungsform der Erfindung ist jedoch vorgesehen, dass das Verfahren die Schritte: h) Senden eines VPN-Datenpaketes von der Vermittlungseinrichtung an die erste Kommunikationseinrichtung und/oder an die zweite Kommunikationseinrichtung, und i) Prüfen ob die erste Kommunikationseinrichtung bzw. die zweite Kommunikationseinrichtung das VPN-Datenpaket erhalten hat, umfasst. Auf diese Weise ist es zum Beispiel möglich zu testen, ob die Kommunikationseinrichtung, neben einem Senden eines VPN-Datenpaketes wie in Schritt c) bzw. f) vorgesehen, auch derart eingerichtet ist, dass die Kommunikationseinrichtung ein VPN-Datenpaket empfangen kann. Dadurch kann also getestet werden, ob eine Firewall, welche beispielsweise das der Kommunikationseinrichtung zugeordnete Netzwerk gegenüber unbefugte Zugriffe schützt, derart konfiguriert ist, dass eine VPN-Verbindung nicht nur ausgehend durch Senden eines VPN-Datenpaketes, wie in Schritt c) bzw. f) vorgesehen, aufbaubar ist, sondern die Firewall auch derart konfiguriert ist, dass eingehende VPN-Verbindungen, also beispielsweise das Empfangen eines VPN-Datenpaketes gemäß Schritt h), aufbaubar sind. Somit lässt sich durch eine derartige Ausgestaltung in besonders einfacher Weise testen oder simulieren, ob die Kommunikationseinrichtung nicht nur VPN-Datenpakete senden, sondern auch empfangen kann.

In diesem Zusammenhang ist gemäß einer weiteren Ausgestaltung der Erfindung bevorzugt, dass das Verfahren die Schritte: g) Benachrichtigen der ersten Kommunikationseinrichtung bzw. der zweiten Kommunikationseinrichtung durch die Vermittlungseinrichtung über den nachfolgenden Schritt h), und j) Ausgeben einer Fehlermeldung falls die erste Kommunikationseinrichtung bzw. die zweite Kommunikationseinrichtung das VPN-Datenpaket nicht erhalten hat, umfasst. Somit ist also gemäß diesen Schritten vorgesehen, dass zum einen die Kommunikationseinrichtung vorab informiert wird, dass ein VPN-Datenpaket von der Vermittlungseinrichtung an die Kommunikationseinrichtung geschickt wird, und zum anderen, dass eine Fehlermeldung ausgegeben wird, wenn das VPN-Datenpaket die Kommunikationseinrichtung nicht erreicht hat. Vorzugsweise umfasst eine derartige Fehlermeldung Informationen über Netzwerke, Protokolle, Gateway IP-Adressen, Ports oder andere aus dem Stand der Technik bekannte Parameter zum Aufbau einer VPN-Verbindung. Derart ausgestaltet lassen sich Probleme beim Aufbau der VPN-Verbindung in besonders einfacher Weise testen und durch Ausgeben einer Fehlermeldung identifizieren sowie lokalisieren.

Nach einer weiteren bevorzugten Ausführungsform der Erfindung wird Schritt c) und/oder Schritt f) nach einer Aufforderung der Vermittlungseinrichtung an die erste Kommunikationseinrichtung bzw. an die zweite Kommunikationseinrichtung ausgeführt. Gemäß dieser Ausführungsform ist also in vorteiliger Weise bevorzugt, dass das VPN-Datenpaket erst dann an die Vermittlungseinrichtung gesendet wird, wenn die Vermittlungseinrichtung dazu auffordert, also beispielsweise Vorkehrungen zum Empfang des VPN-Datenpaketes getroffen hat.

Eine Lösung der zuvor genannten Aufgabe erfolgt weiterhin durch eine Verwendung des vorab ausgeführten Verfahrens zur Fernwartung einer Anlage, wobei die erste Kommunikationseinrichtung über ein Netzwerk mit der Anlage verbunden ist. Durch eine derartige Verwendung des erfindungsgemäßen Verfahrens lässt sich eine Anlage, beispielsweise eine Industrieanlage, in besonders einfacher Weise fernwarten, ohne dass für den Aufbau der zur Fernwartung benötigten VPN-Verbindung spezialisierte Kenntnisse über VPN-Protokolle beim Anwender vorhanden sein müssen.

Weitere Ausgestaltungen und Vorteile der erfindungsgemäßen Verwendung des erfindungsgemäßen Verfahrens ergeben sich dem Fachmann in Analogie zu dem vorab ausgeführten Verfahren.

Eine Lösung der zuvor genannten Aufgabe erfolgt weiterhin durch eine Vermittlungseinrichtung zur Durchführung eines vorab ausgeführten Verfahrens. Vorzugsweise ist die Vermittlungseinrichtung als Server ausgeführt.

Weitere Ausgestaltungen und Vorteile der erfindungsgemäßen Vermittlungseinrichtung ergeben sich dem Fachmann in Analogie zu dem vorab ausgeführten Verfahren.

Nachfolgend wird die Erfindung unter Bezugnahme auf die Zeichnung anhand eines bevorzugten Ausführungsbeispiels näher erläutert.

In der Zeichnung zeigen:
- Fig. 1: eine schematische Übersicht einer aus dem Stand der Technik bekannten Fernwartungsumgebung,
- Fig. 2: eine schematische Übersicht der Fernwartungsumgebung mit einer Vermittlungseinrichtung gemäß einem bevorzugten Ausführungsbeispiel der Erfindung,

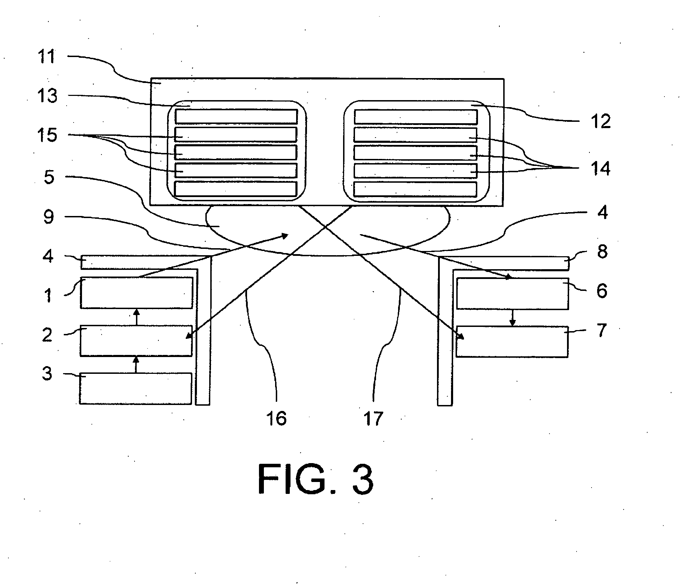

- Fig. 3: eine schematische Übersicht der Fernwartungsumgebung mit der Vermittlungseinrichtung gemäß dem bevorzugten Ausführungsbeispiel der Erfindung in einer weiteren Ansicht.

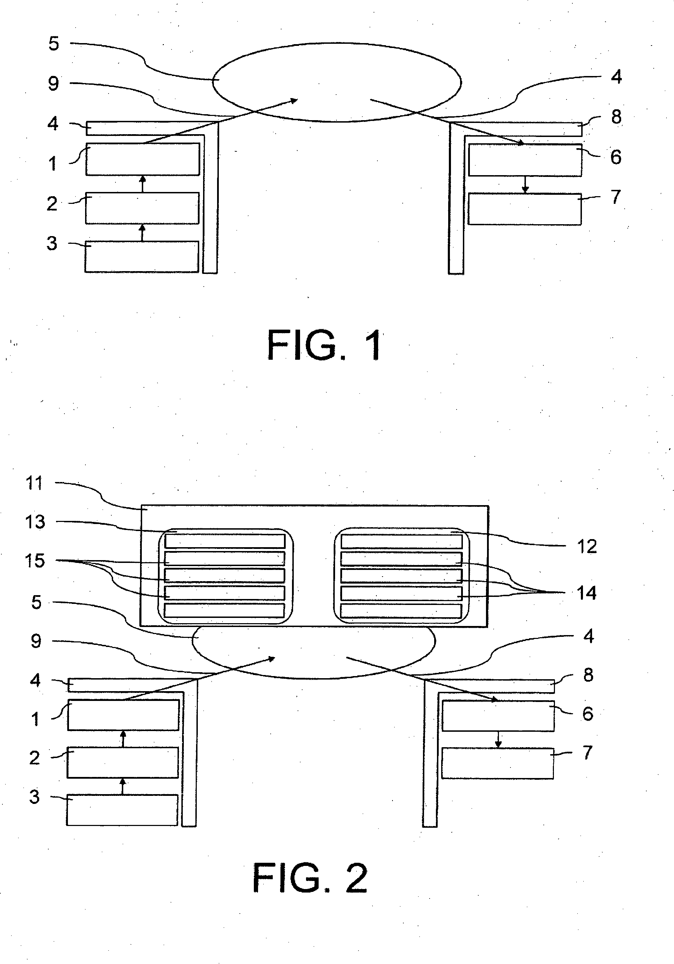

Aus Fig. 1 ist eine aus dem Stand der Technik bekannte Fernwartungsumgebung ersichtlich, umfassend zum einen ein bei einem Anlagenbetreiber angeordnetes Netzwerk 1, welches über eine erste Kommunikationseinrichtung 2 mit einer Anlage 3 des Betreibers verbunden ist. Das erste Netzwerk 1 sowie die erste Kommunikationseinrichtung 2 und die Anlage 3 sind über eine Firewall 4 mit dem Internet 5 verbunden.

Ebenfalls ersichtlich in Fig. 1 ist ein zweites bei einem Fernwartungsanbieter angeordnetes Netzwerk 6, welches eine zweite Kommunikationseinrichtung 7 umfasst und geschützt durch eine Firewall 8 mit dem Internet 5 verbunden ist.

Das erste Netzwerk 1, das zweite Netzwerk 6 und das Internet 5 arbeiten mit dem aus dem Stand der Technik bekannten IP-Protokoll. Ebenfalls sind Firewalls 4, 8 als aus dem Stand der Technik bekannte Firewalls 4, 8 ausgeführt, welche somit zum einen Schutz gegen unbefugte Zugriffe aus dem Internet 5 bieten, jedoch zum anderen für ausgehende VPN-Verbindungen 9 bzw. eingehende VPN-Verbindungen 10 derart konfiguriert sind, dass die Verbindungen 9, 10 durch die Firewalls 4, 8 hindurchgelassen werden. Ferner ist die Anlage 3 als eine beliebige aus dem Stand der Technik bekannte Industrieanlage ausgeführt. Die erste Kommunikationseinrichtung 2 und die zweite Kommunikationseinrichtung 7 sind jeweils als VPN-Router zum Aufbau einer VPN-Verbindung zwischen den Kommunikationseinrichtungen 2, 7 ausgestaltet.

Bei dem erfindungsgemäßen Verfahren erfolgt in einem ersten Schritt a) das Herstellen einer Verbindung zwischen der ersten Kommunikationseinrichtung 2 und einer Vermittlungseinrichtung 11, welche vorliegend als Server ausgeführt ist, wobei die Vermittlungseinrichtung 11 ebenfalls mit dem Internet 5 verbunden ist.

Gemäß Schritt b) erfolgt danach ein Identifizieren der ersten Kommunikationseinrichtung 2 mit einem Identifikationsmittel gegenüber der Vermittlungseinrichtung 11, was vorliegend als einloggen auf der Webseite der Vermittlungseinrichtung 11 derart erfolgt, dass durch die erste Kommunikationseinrichtung 2 auf der Webseite ein temporärer Login-Account als Identifikationsmittel generiert wird. Dabei kann sowohl Schritt a) als auch Schritt b) durch einen Anwender der Anlage 3 initiiert werden.

In einem folgenden Schritt c) sendet die erste Kommunikationseinrichtung 2 ein erstes VPN-Datenpaket an die Vermittlungseinrichtung 11, wobei die Vermittlungseinrichtung 11 das gesendete VPN-Datenpaket von der ersten Kommunikationseinrichtung 2 empfängt.

Als Nächstes wird gemäß Schritt d) eine Verbindung zwischen der zweiten Kommunikationseinrichtung 6 und der Vermittlungseinrichtung 11 erstellt, vorliegend ebenso durch Aufrufen der der Vermittlungseinrichtung 11 zugeordneten Webseite.

Im darauffolgenden Schritt e) identifiziert sich die zweite Kommunikationseinrichtung 6 mit dem gleichen Identifikationsmittel, also mit dem gleichen temporären Login-Account gegenüber der Vermittlungseinrichtung 11 und sendet in Schritt f) ein zweites VPN-Datenpaket von der zweiten Kommunikationseinrichtung 6 an die Vermittlungseinrichtung 11. Die Vermittlungseinrichtung 11 empfängt dazu das zweite VPN-Datenpaket von der zweiten Kommunikationseinrichtung 6.

In Schritt k) bestimmt die Vermittlungseinrichtung 11 aus den empfangenen VPN-Datenpaketen einen ersten VPN-Konfigurationsparameter 12 und einen zweiten VPN-Konfigurationsparameter 13. Die VPN-Konfigurationsparameter 12, 13 umfassen dazu Informationen 14, 15 wie Netzwerke, Protokolle, Gateway-IP-Adressen und/oder Ports sowie weitere aus dem Stand der Technik bekannte Parameter zum Aufbau einer VPN-Verbindung, welche durch die Vermittlungseinrichtung 11 aus den empfangenen VPN-Datenpakete extrahiert werden. Dabei sind die VPN-Konfigurationsparameter 12, 13 derart ausgestaltet, dass nach einem Bereitstellen 16, 17 der VPN-Konfigurationsparameter 12, 13 gemäß Schritten 1) und m) durch die Vermittlungseinrichtung 11 an die jeweiligen Kommunikationseinrichtungen 2, 7 die Kommunikationseinrichtungen 2, 7 mittels der erhaltenen VPN-Konfigurationsparameter 12, 13 unmittelbar eine VPN-Verbindung gemäß Schritt n) aufbauen können.

Zum Testen bzw. Simulieren der generierten VPN-Konfigurationsparameter 12, 13 können gemäß Schritt h) VPN-Datenpakete von der Vermittlungseinrichtung 11 an die Kommunikationseinrichtungen 2, 7 geschickt werden.

In einem darauffolgenden Schritt i) wird dann geprüft, ob die VPN-Datenpakete die erste Kommunikationseinrichtung 2 bzw. die zweite Kommunikationseinrichtung 7 erreicht haben.

Durch das Ausgeben einer Fehlermeldung, wie beispielsweise: "Eingehende UDP-Pakete auf Port 500 werden geblockt", gemäß Schritt j) kann dann beispielsweise erkannt werden, ob die Firewall 4, 8 eine eingehende Verbindung 10 verhindert, so dass ein Anwender die Konfiguration des Firewalls 4, 8 für die zum Aufbau der VPN-Verbindung benötigten ausgehenden Verbindungen 9 bzw. eingehenden Verbindungen 10 konfigurieren kann. Dazu ist es vorteilhaft, dass die Vermittlungseinrichtung 11 vor dem testweisen Versenden des VPN-Datenpakets die entsprechende Kommunikationseinrichtung 2, 7 gemäß Schritt g) informiert. Die Erfindung ermöglicht somit auch in einfacher Weise einen Fehler beim Aufbau der VPN-Verbindung zu diagnostizieren und zu lokalisieren.

Bricht eine einmal aufgebaute VPN-Verbindung zusammen, so kann in einfacher Weise das vorab ausgeführte Verfahren zum nochmaligen Aufbauen der VPN-Verbindung wiederholt werden.

### Bezugszeichenliste

- Erstes Netzwerk: 1
- Erste Kommunikationseinrichtung: 2
- Anlage: 3
- Firewall: 4
- Internet: 5
- Zweites Netzwerk: 6
- Zweite Kommunikationseinrichtung: 7
- Firewall: 8
- Ausgehende Verbindung: 9
- Eingehende Verbindung: 10
- Vermittlungseinrichtung: 11
- Erster VPN-Konfigurationsparameter: 12
- Zweiter VPN-Konfigurationsparameter: 13
- Information: 14
- Information: 15
- Bereitstellen des ersten VPN-Konfigurationsparameters: 16
- Bereitstellen des zweiten VPN-Konfigurationsparameters: 17

## Patentansprüche

1. Verfahren zum Aufbau einer VPN-Verbindung zwischen zwei Netzwerken (1, 6), mit zwei den jeweiligen Netzwerken (1, 6) zugeordneten Kommunikationseinrichtungen (2, 7), einer Vermittlungseinrichtung (11) und einem Identifikationsmittel, mit den Schritten:
b) Identifizieren der ersten Kommunikationseinrichtung (2) mit dem Identifikationsmittel gegenüber der Vermittlungseinrichtung (11) umfassend ein Einloggen auf einer Webseite der Vermittlungseinrichtung (11), wobei das Identifikationsmittel als ein temporärer Login-Account der Webseite ausgestaltet ist, der von der ersten Kommunikationseinrichtung (2) in diesem Schritt erstellt wird,
c) Senden eines ersten VPN-Datenpaketes von der ersten Kommunikationseinrichtung (2) an die Vermittlungseinrichtung (11),
e) Identifizieren der zweiten Kommunikationseinrichtung (7) mit dem Identifikationsmittel gegenüber der Vermittlungseinrichtung (11) umfassend ein Einloggen auf der Webseite der Vermittlungseinrichtung (11), wobei das Identifikationsmittel als der temporäre Login-Account der Webseite aus Schritt b) ausgestaltet ist,
f) Senden eines zweiten VPN-Datenpaketes von der zweiten Kommunikationseinrichtung (7) an die Vermittlungseinrichtung (11),
k) Extrahieren des ersten VPN-Konfigurationsparameters (12) und des zweiten VPN-Konfigurationsparameters (13) aus dem empfangenen ersten VPN-Datenpaket und/oder aus dem empfangenen zweiten VPN-Datenpaket durch die Vermittlungseinrichtung (11),
1) Bereitstellen (16) eines ersten VPN-Konfigurationsparameters (12) zum Aufbau den VPN-Verbindung zwischen den Kommunikationseinrichtungen (2, 7) für die erste Kommunikationseinrichtung (2) durch die Vermittlungseinrichtung (11),
m) Bereitstellen (17) eines zweiten VPN-Konfigurationsparameters (13) zum Aufbau der VPN-Verbindung zwischen den Kommunikationseinrichtungen (2, 7) für die zweite Kommunikationseinrichtung (7) durch die Vermittlungseinrichtung (11), und
n) Aufbau der VPN-Verbindung zwischen den Kommunikationseinrichtungen (2, 7) durch die erste Kommunikationseinrichtung (2) und/oder durch die zweite Kommunikationseinrichtung (7).

2. Verfahren nach dem vorhergehenden Anspruch, mit den Schritten:
a) Herstellen einer Verbindung zwischen der ersten Kommunikationseinrichtung (2) und der Vermittlungseinrichtung (11), und
d) Herstellen einer Verbindung zwischen der zweiten Kommunikationseinrichtung (7) und der Vermittlungseinrichtung (11).

3. Verfahren nach einem der vorhergehenden Ansprüche, mit den Schritten:
h) Senden eines VPN-Datenpaketes von der Vermittlungseinrichtung (11) an die erste Kommunikationseinrichtung (2) und/oder an die zweite Kommunikationseinrichtung (7),
i) Prüfen ob die erste Kommunikationseinrichtung (2) bzw. die zweite Kommunikationseinrichtung (7) das VPN-Datenpaket erhalten hat.

4. Verfahren nach dem vorhergehenden Anspruch, mit den Schritten:
g) Benachrichtigen der ersten Kommunikationseinrichtung (2) bzw. der zweiten Kommunikationseinrichtung (7) durch die Vermittlungseinrichtung (11) über den nachfolgenden Schritt h), und
j) Ausgeben einer Fehlermeldung falls die erste Kommunikationseinrichtung (2) bzw. die zweite Kommunikationseinrichtung (11) das VPN-Datenpaket nicht erhalten hat.

5. Verfahren nach einem der vorhergehenden Ansprüche, wobei Schritt c) und/oder Schritt f) nach einer Aufforderung der Vermittlungseinrichtung (11) an die erste Kommunikationseinrichtung (2) bzw. an die zweite Kommunikationseinrichtung (11) ausgeführt wird.

6. Verwendung eines Verfahrens nach einem der vorhergehenden Ansprüche zur Fernwartung einer Anlage (3), wobei die erste Kommunikationseinrichtung (2) über ein Netzwerk (1) mit der Anlage (3) verbunden ist.

7. Vermittlungseinrichtung (11) zur Durchführung eines Verfahrens nach einem der vorhergehenden Ansprüche.

## Claims

1. Method for establishing a VPN connection between two networks (1, 6), with two communication devices (2, 7) assigned to the given networks (1, 6), a transmission device (11), and an identifying means, involving the following steps:
b) identifying the first communication device (2) to the transmission device (11) through use of the identifying means comprising a log-in on a webpage of the transmission device (11), whereby the identifying means is configured as a temporary log-in account for the webpage, which is created by the first communication device (2) at this step,
c) transmitting an initial VPN data package from the first communication device (2) to the transmission device (11),
e) identifying the second communication device (7) to the transmission device (11) by means of the identifying means, whereby the identifying means is configured as the temporary log-in account for the webpage of step b),
f) transmitting a second VPN data package from the second communicating device (7) to the transmission device (11),
k) extracting by the transmission device (11) of the first VPN configuration parameter (12) and the second VPN configuration parameter (13) from the received initial VPN data packet and/or from the received second VPN data packet,
1) provision (16) by the transmission device (11) of an initial VPN configuration parameter (12) for establishing the VPN connection between the communication devices (2, 7) for the first communication device (2),
m) provision (17) by the transmission device (11) of a second VPN configuration parameter (13) for establishing the VPN connection between the communication devices (2, 7) for the second communication device (7), and
n) establishment of the VPN connection between the communication devices (2, 7) by the first communication device (2) and/or by the second communication device (7).

2. Method according the previous claim, with the steps:
a) establishing a connection between the first communication device (2) and the transmission device (11), and
d) establishing a connection between the second communication device (7) and the transmission device (11).

3. Method according to any of the previous claims, with the steps:
h) sending a VPN data packet from the transmission device (11) to the first communication device (2) and/or the second communication device (7),
i) testing whether the first communication device (2) or, as the case may be, the second communication device (7) has received the VPN data packet.

4. Method according the previous claim, with the steps:
g) informing the first communication device (2) or, as the case may be, the second communication device (7) via the transmission device (11) of the subsequent step h), and
j) issuing an error message if the first communication device (2) or, as the case may be, the second communication device (11) has not received the VPN data packet.

5. Method according to any of the previous claims, where step c) and/or step f) are executed after a request is made by the transmission device (11) to the first communication device (2) or, as the case may be, the second communication device (11).

6. Use of a method according to any of the previous claims for the remote maintenance of a plant (3), such that the first communication device (2) is connected to the plant by a network (1).

7. Transmission device (11) for implementing a method according to any of the previous claims.

## Revendications

1. Procédé pour l'établissement d'une liaison VPN entre deux réseaux (1, 6), avec deux moyens de communication (2, 7) d'un commutateur (11), attribués aux réseaux (1, 6) respectifs, et un moyen d'identification, avec les étapes suivantes :
b) identification du premier moyen de communication (2) à l'aide du moyen d'identification vis-à-vis du commutateur (11), comprenant une connexion à une page web du commutateur (11), dans lequel le moyen d'identification est conçu comme un compte d'utilisateur temporaire de la page web, lequel est créé par le premier moyen de communication (2) au cours de cette étape,
c) envoi d'un premier paquet de données VPN du premier moyen de communication (2) au commutateur (11),
e) identification du deuxième moyen de communication (7) avec le moyen d'identification vis-à-vis du commutateur (11), comprenant une connexion à la page web du commutateur (11), le moyen d'identification étant conçu comme le compte d'utilisateur temporaire de la page web selon l'étape b),
f) envoi d'un deuxième paquet de données VPN du deuxième moyen de communication (7) au commutateur (11),
k) extraction du premier paramètre de configuration VPN (12) et du deuxième paramètre de configuration VPN (13) à partir du premier paquet de données VPN reçu et/ou à partir du deuxième paquet de données VPN reçu, par le commutateur (11),
1) mise à disposition (16) par le commutateur (11) d'un premier paramètre de configuration VPN (12) pour le premier moyen de communication (2), pour l'établissement de la liaison VPN entre les moyens de communication (2, 7),
m) mise à disposition (17), par le commutateur (11), d'un deuxième paramètre de configuration VPN (13) pour le deuxième moyen de communication (7), pour l'établissement de la liaison VPN entre les moyens de communication (2, 7), et
n) établissement de la liaison VPN entre les moyens de communication (2, 7), par le premier moyen de communication (2) et/ou par le deuxième moyen de communication (7).

2. Procédé selon la revendication précédente, avec les étapes suivantes :
a) établissement d'une liaison entre le premier moyen de communication (2) et le commutateur (11), et
d) établissement d'une liaison entre le deuxième moyen de communication (7) et le commutateur (11).

3. Procédé selon l'une des revendications précédentes, avec les étapes suivantes :
h) envoi d'un paquet de données VPN du commutateur (11) au premier moyen de communication (2) et/ou au deuxième moyen de communication (7),
i) vérification de l'obtention du paquet de données VPN par le premier moyen de communication (2) ou le deuxième moyen de communication (7).

4. Procédé selon la revendication précédente, avec les étapes suivantes :
g) notification de l'étape suivante h) au premier moyen de communication (2) ou au deuxième moyen de communication (7) par le commutateur (11), et
j) émission d'un message d'erreur si le premier moyen de communication (2) ou le deuxième moyen de communication (11) n'a pas obtenu le paquet de données VPN.

5. Procédé selon l'une des revendications précédentes, dans lequel l'étape c) et/ou l'étape f) est exécutée suite à un ordre du commutateur (11) au premier moyen de communication (2) ou au deuxième moyen de communication (11).

6. Utilisation d'un procédé selon l'une des revendications précédentes, pour la maintenance à distance d'une installation (3), dans laquelle le premier moyen de communication (2) est relié à l'installation (3) par le biais d'un réseau (1).

7. Commutateur (11) pour l'exécution d'un procédé selon l'une des revendications précédentes.
